# EUROPÄISCHE PATENTANMELDUNG

(11) **EP 4 467 938 A1**
(43) Veröffentlichungstag der Anmeldung: **27.11.2024**
(21) Anmeldenummer: 24176961.1
(22) Anmeldetag: 21.05.2024
(51) Int. Cl.: G01F 23/284, G01F 23/14, G01F 23/22, G01L 7/00

(54) **MESSSYSTEM UND VERFAHREN MIT ENERGIE-MANAGEMENT-ANORDNUNG**

(30) Priorität: 25.05.2023 DE 102023113818
(71) Anmelder: VEGA Grieshaber KG, 77709 Wolfach (DE)
(72) Erfinder: KRÄMER, Florian, 77796 Mühlenbach (DE); ALLGAIER, Stefan, 77709 Oberwolfach (DE); HEIZMANN, Patrick, 77709 Oberwolfach (DE)
(74) Vertreter: Maiwald GmbH

(57) **Zusammenfassung**

Die Erfindung betrifft ein Messsystem (100), welches zum Messen eines Füllstands, eines Grenzstands und/oder eines Drucks eingerichtet ist. Das Messsystem (100) weist einen Messsensor (110), aufweisend einen Betriebsmodus, und eine Energie-Management-Anordnung (120) auf, die eine Steuereinrichtung aufweist und dazu eingerichtet ist, die Stromversorgung für den Messsensor (110) anzusteuern. Die Steuereinrichtung der Energie-Management-Anordnung (120) ist mit dem Messsensor (110) gekoppelt und dazu eingerichtet, ereignisorientiert den Betriebsmodus des Messsensors (110) zu aktivieren und/oder die elektrische Energie zum Betreiben des Messsensors (110) in dem Betriebsmodus zu erzeugen und/oder den Messsensor (110) in dem Betriebsmodus mit der erzeugten elektrischen Energie zu versorgen. Die Erfindung betrifft ferner eine Energie-Management-Anordnung für ein Messsystem, die Verwendung einer Energie-Management-Anordnung sowie eines Messsystems, ein Verfahren mittels eines Messsystems zum Messen eines Füllstands, eines Grenzstands und/oder eines Drucks und ein computerlesbares Medium.

## Beschreibung

Die vorliegende Anmeldung beansprucht die Priorität der deutschen Patentanmeldung Nr. 10 2023 113 818.9, eingereicht am 25. Mai 2023, die in vollem Umfang durch Bezugnahme in das vorliegende Dokument aufgenommen wird.

### Gebiet der Erfindung

Die Erfindung betrifft die Prozessmesstechnik und die Prozessautomatisierung im industriellen Umfeld. Insbesondere betrifft die Erfindung ein Messsystem zum Messen eines Füllstands, eines Grenzstands und/oder eines Drucks, eine Energie-Management-Anordnung für ein Messsystem, die Verwendung einer Energie-Management-Anordnung zum Energiesparen in einer Prozessanlage, die Verwendung eines Messsystems für eine Füllstand-, Grenzstand- und/oder Druckmessung in einem Behälter und/oder an einer offenen Messestelle eines Gewässers, ein Verfahren mittels eines Messsystems zum Messen eines Füllstands, eines Grenzstands und/oder eines Drucks und ein computerlesbares Medium.

### Technischer Hintergrund

Feldgeräte werden häufig im industriellen Umfeld zum Messen von relevanten Messgrößen in der Prozessanlage eingesetzt. Damit die Sensoren und die weiteren elektrischen Komponenten der Feldgeräte über einen langen Zeitraum und zuverlässig im Einsatz bleiben können, ist ein sicheres Energieversorgungssystem von großer Bedeutung, insbesondere wenn die Sensoren von verschiedenen Arten und an mehreren Messstellen in der Anlage verteilt eingesetzt sind.

### Zusammenfassung

Es ist eine Aufgabe der vorliegenden Erfindung, ein Feldgerät in einer Anlage mit einem verbesserten Energiegewinnungs- bzw. Energieverwaltungssystem anzugeben.

Diese Aufgabe wird durch die Merkmale des unabhängigen Patentanspruchs gelöst. Weiterbildungen der Erfindung ergeben sich aus den abhängigen Patentansprüchen und der folgenden Beschreibung von Ausführungsformen.

Ein erster Aspekt der vorliegenden Offenbarung betrifft ein Messsystem, das zum Messen eines Füllstands, eines Grenzstands und/oder eines Drucks eingerichtet ist und einen Messsensor, der einen Betriebsmodus aufweist, und eine Energie-Management-Anordnung umfasst. Die Energie-Management-Anordnung weist eine Steuereinrichtung auf und ist dazu eingerichtet, ereignisorientiert den Betriebsmodus des Messsensors zu aktivieren und/oder die elektrische Energie zum Betreiben des Messsensors in dem Betriebsmodus zu erzeugen und/oder den Messsensor in dem Betriebsmodus mit der erzeugten elektrischen Energie zu versorgen.

Ereignisorientiert kann das Ansteuern mittels der Steuereinrichtung der Energie-Management-Anordnung anhand des Vorhandenseins oder Erkennens des Lichtstrahls, beispielsweise bei dem Sonnenaufgang, einer vorbestimmten Lichtintensität des Lichtstrahls, eines vorbestimmten Einfallswinkels des Lichtstrahls oder einer Wetterbedingung, wie zum Beispiel eines Starkregens, in der Umgebung erfolgen. Alternativ oder zusätzlich kann das Ansteuern mittels der Steuereinrichtung der Energie-Management-Anordnung ereignisorientiert bei einer standortabhängigen Messung, einer uhrzeitabhängigen Messung, einer lageabhängigen Messung, beispielsweise wenn der Behälter vertikal oder horizontal angeordnet ist, erfolgen. Alternativ oder zusätzlich kann das Ansteuern mittels der Steuereinrichtung der Energie-Management-Anordnung ereignisorientiert bei einem externen Trigger durch einen weiteren Sensor, einer temperaturabhängigen Messung oder einer vibrationsabhängigen Messung erfolgen.

Konventionell kann ein autarker Messsensor zum Energiesparen eingesetzt werden, der zyklisch oder nach einem fest vorgegebenen Zeitraster eingeschaltet werden kann. Dadurch kann der Messvorgang mittels des Messsensors ausgelöst werden.

Im Vergleich zu dem Fall, bei dem beispielsweise ein autarker Messsensor nur dauerhaft oder in einem fest vorgegebenen Zeitraster betrieben werden kann, und bei dem ein relativ intensiver Energieverbrauch vorliegen kann und/oder ein relativ großer Wartungsaufwand für den regelmäßigen Austausch von den verbrauchten Batterien oder Akkumulatoren erforderlich sein kann, kann der Messsensor des Messsystems durch das ereignisorientierte Aktivieren mittels der Energie-Management-Anordnung nur wenige Male pro Tag oder pro Woche oder pro Jahr zum Messen eines zu überwachenden Füllstands, Grenzstands und/oder Drucks aktiviert und in den Betriebsmodus versetzt werden. Wenn der Messsensor nicht im Betriebsmodus ist, kann die Energieversorgung durch die Energie-Management-Anordnung verhindert oder minimiert werden, um weiterhin den unnötigen Energieverlust des Messsystems zu reduzieren. Dadurch kann ein wartungsarmes und energiesparendes Messsystem zur ereignisorientierten Füllstand-, Grenzstand- und/oder Druckmessung realisiert werden.

Beispielsweise kann es vorgesehen sein, dass unterschiedliche Parameter ereignisorientiert zum Aktivieren des Betriebsmodus des Messsensors einzustellen sein können. Beispielsweise kann eine Parameteränderung für die Messung mittels des Messsensors bei dem Licht oder bei der Dunkelheit ausgeführt sein. Beispielsweise kann es vorgesehen sein, dass der Betriebsmodus des Messsensors bei dem Licht alle 15 min und/oder bei der Dunkelheit alle 12 h aktiviert werden kann. Alternativ kann der Betriebsmodus des Messsensors bei dem Licht alle 12 h und/oder bei der Dunkelheit alle 15 min aktiviert werden.

Gemäß einer Ausführungsform weist die Energie-Management-Anordnung eine Solar-Harvesting-Anordnung als eine erste Versorgungseinheit auf. Die Solar-Harvesting-Anordnung kann dazu eingerichtet sein, den Messsensor in dem Betriebsmodus mit der elektrischen Energie zu versorgen.

Beispielsweise kann die Enocean-Technologie verwendet werden, sodass für das Senden von kurzen Funksignalen aus dem Messsensor nur geringe Mengen an Energie, die durch Harvesting-Methoden erzeugt werden kann, benötigt werden. Als "Energy Harvesting" bzw. "Energie-Ernten" kann allgemein eine Energiegewinnung kleiner Mengen von der elektrischen Energie aus Quellen wie Umgebungstemperatur, Licht, Vibrationen und/oder Luftströmungen bezeichnen.

Mit der Solar-Harvesting-Anordnung kann die Energie-Management-Anordnung des Messsystems auch eine Energiegewinnung aus der Lichtenergie ermöglicht werden, damit die Energieversorgung zum Betreiben des Messsensors oder des Messsystems entlastet werden kann.

Ferner kann mittels der Solar-Harvesting-Anordnung der Energieverbrauch bei der kompletten Messstelle für den Messsensor massiv sinken. Zum Teil kann insgesamt wenige oder sogar nie Energie benötigt werden. Alternativ kann vorgesehen sein, dass der Messsensor an der Messstelle, denen wenig Energie zur Verfügung für das Betreiben des Akku- oder Batteriebetriebenen Messsensors die Messung durchführen kann, nur wenn es erforderlich ist. Dies kann zu einer verlängerten Laufzeit und einen geringeren Wartungsaufwand z.B. durch Batteriewechsel für das Messsystem führen.

Gemäß einer weiteren Ausführungsform weist die Solar-Harvesting-Anordnung der Energie-Management-Anordnung eine Lichtsammeleinheit, die zum Sammeln und/oder Konzentrieren der Lichtenergie eingerichtet ist, einen Lichtwellenleiter und eine Solarzelle, die zum Erzeugen der elektrischen Energie aus der Lichtenergie eingerichtet ist, auf.

Die Solarzelle oder das Solarmodul kann vor der mechanischen Beeinträchtigung oder der Beschädigung geschützt an dem Messsensor angebracht sein.

Darüber hinaus kann der Lichtwellenleiter zwischen der Lichtsammeleinheit und der Solarzelle angeordnet sein und zum Führen der Leichtenergie von der Lichtsammeleinheit an die Solarzelle eingerichtet sein. Somit kann die Lichtenergie derart gesammelt und gezielt abgegeben werden, um das Aufwecken und die Energiegewinnung des Messsensors zu steuern.

Der Vorteil des Lichtwellenleiters kann darin bestehen, dass es keine Störungen von elektromagnetischen und elektrischen Einflüssen geben kann, die wiederum den Messsensor stören kann.

Gemäß einer weiteren Ausführungsform ist die Lichtsammeleinheit beabstandet von der Solarzelle angeordnet.

Die Lichtsammeleinheit kann von der Solarzelle und/oder dem Messsensor entfernt oder abgesetzt angeordnet sein. Der Abstand zwischen der Lichtsammeleinheit und der Solarzelle und/oder dem Messsensor kann je nach Anwendung individuell vorgesehen sein.

Gemäß einer weiteren Ausführungsform weist die Lichtsammeleinheit eine Linse auf.

Die Linse, die eine Fokussierlinse sein kann, kann zum Lichtkonzentrieren von Lichtstrahlen, wie z.B. der Sonne, eingerichtet sein, um die Effizienz beim Sammeln der Lichtenergie zu erhöhen.

Gemäß einer weiteren Ausführungsform ist die Lichtsammeleinheit bewegbar ausgebildet, sodass die Lichtsammeleinheit flexibel ausgerichtet werden kann.

Die Lichtsammeleinheit kann bewegbar ausgebildet sein, um automatisch der Sonne nachführbar zu sein. Somit kann die Lichtenergie durch die Bewegung der Lichtsammeleinheit derart ausgerichtet sein, damit die maximale Lichtenergie von der Lichtquelle bzw. der Sonne effizient gesammelt und konzentriert werden kann.

Darüber hinaus kann vorgesehen sein, dass die von dem Messsensor und/oder der Solarzelle abgesetzt oder beabstandet angeordnete Lichtsammeleinheit komplett ohne Spannungsversorgung oder mit einer Batterie oder einem Akkumulator betrieben werden. Mittels der von dem Messsensor abgesetzten Lichtsammeleinheit kann das gesammelte Licht durch die Fokussierlinse über den beweglichen Lichtwellenleiter zum Sensor und/oder zu der Solarzelle oder dem Solarmodul geleitet werden.

Beispielsweise kann die Linse der Lichtsammeleinheit das Licht auch bei schrägem Lichteinfall bündeln, so dass dadurch deutliche Vorteile gegenüber einem Solarpanel ohne Linse bestehen können. Auch mögliche Verschmutzungen oder teilweise Abschattungen kann sich kaum negative auf die Stromgewinnung auswirken.

Gemäß einer weiteren Ausführungsform weist die Solar-Harvesting-Anordnung der Energie-Management-Anordnung weiterhin einen Anschluss auf, der zum nachrüstbaren Montieren des Lichtwellenleiters und/oder der Lichtsammeleinheit an dem Messsensor eingerichtet ist.

Der Anschluss kann beispielsweise als eine Verschraubungseinheit ausgebildet und direkt an der Solarzelle bzw. zwischen der Solarzelle und dem Lichtwellenleiter angeordnet sein. Alternativ kann der Anschluss mit der Solarzelle zusammen in dem Sensor integriert sein. Der Anschluss kann derart ausgebildet sein, um das Verbinden oder das Befestigen des Lichtwellenleiters mit der Solarzelle zu ermöglichen oder zu vereinfachen. Darüber hinaus kann der Anschluss derart ausgebildet sein, den Lichtwellenleiter lösbar an der Solarzelle zu befestigen. Somit kann der Lichtwellenleiter ohne Weiteres nachrüstbar montiert und/oder ausgetauscht werden.

Gemäß einer weiteren Ausführungsform ist die Solarzelle an dem Messsensor angeordnet. Alternativ kann die Solarzelle in dem Messsensor integriert sein.

Beispielsweise kann die Solarzelle im direkt Kontakt mit dem Messsensor angeordnet bzw. in dem Messsensor zumindest teilweise integriert sein. Beim Anordnen der Solarzelle an dem Messsensor kann die von der Lichtenergie umgewandelte elektrische Energie unmittelbar und ohne große Verlust zum Versorgen des Messsensors dienen.

Gemäß einer weiteren Ausführungsform ist der Lichtwellenleiter flexible und/oder länglich ausgebildet.

Der Lichtwellenleiter kann beispielsweise aus einem Glasfaserkabel bestehen.

Gemäß einer weiteren Ausführungsform ist der Messsensor innerhalb eines Behälters und/oder an einer dunklen Messstelle angeordnet.

Beispielsweise kann der Messsensor abgesetzt von der Lichtsammeleinheit der Energiesammeleinheit tief in einem Behälter oder Schacht bzw. innerhalb eines Behältergehäuses angeordnet sein. Die Lichtsammeleinheit kann dagegen außerhalb des geschlossenen Behälters zum Empfangen und Sammeln der Lichtenergie angeordnet sein und dazu eingerichtet sein, die gesammelte Lichtenergie durch den Lichtwellenleiter durch den Deckel des Behälters hindurch an die Solarzelle zum Umwandeln der Lichtenergie in die elektrische Energie zum Versorgen des Messsensors in dem Betriebsmodus zu führen oder leiten.

Alternativ kann die abgesetzt angeordnete Lichtsammeleinheit gemeinsam mit dem Messsensor in dem Behälter angeordnet sein. In diesem Fall kann die Lichtsammeleinheit unterhalb eines transparent ausgebildeten Behälterdeckel angeordnet sein, damit die Lichtsammeleinheit durch den Deckel hindurch den Lichtstrahl bzw. die Lichtenergie sammeln kann.

Alternativ kann die Lichtsammeleinheit als ein Sonnensammler in einem Schwenkdeckel untergebracht werden. Dieser Schwenkdeckel kann die Sonnenenergie einsammeln und über den Lichtwellenleiter an die Solarzelle im Innern des Messsensors weiterleiten. Diese Anordnung kann einen Vorteil aufweisen, dass die Oberfläche des Messsensors für eine Anzeige und/oder ein Bedienelement frei bleiben. Somit kann beispielsweise die Linse der Lichtsammeleinheit bestmöglich ausgerichtet sein.

Alternativ kann die Lichtsammeleinheit in einer offenen Stelle, wie zum Beispiels in einer Straße oder an der Oberseite einer Brücke über ein Gewässer odervorgesehen sein, während der Messsensor und/oder die Solarzelle an der dunklen Stelle unterirdisch oder unterhalb der Brücke über ein Gewässer oder einen Kanal angeordnet sein kann, um den Füllstand, den Grenzstand und/oder den Druck zu messen.

Gemäß einer weiteren Ausführungsform ist die Steuereinrichtung der Energie-Management-Anordnung dazu eingerichtet, mit einem vordefinierten Zeitintervall den Betriebsmodus des Messsensors zu aktivieren.

Zusätzlich zu dem ereignisorientierten Aktivieren des Betriebsmodus des Messsensors durch die Energie-Harvesting-Anordnung kann das regelmäßige Aktivieren des Betriebsmodus mit dem vorgegebenen Zeitintervall ausgeführt werden, um einen kombinierten oder gemischten Aktivierungsmodus zu erzielen.

Gemäß einer weiteren Ausführungsform weist die Energie-Management-Anordnung weiterhin eine zweite Versorgungseinheit auf, die dazu eingerichtet ist, den Messsensor mit dem Strom zu versorgen.

Gemäß einer weiteren Ausführungsform ist die zweite Versorgungseinheit der Energie-Management-Anordnung eine Batterie oder ein Akkumulator.

Somit kann das Messsystem zumindest teilweise autark ausgeführt sein. Das Messsystem kann durch die Energie-Management-Anordnung mit den ersten und zweiten Versorgungseinheiten über einen langen Zeitraum in einer Prozessanlage und sogar in einem Betriebsgelände in einem explosionsgefährlichen Gebiet eingesetzt werden.

Darüber hinaus kann der Messsensor des Messsystems drahtlos, beispielsweise per Funkkommunikationstechnologie, die Messdaten versenden. Im Vergleich zu einer drahtgebundenen Kommunikation, bei der die für die Messung sowie die Versendung der Messwerte erforderliche Energie dauerhaft im Einsatz stehen soll, kann mit der Verfügbarkeit weiterentwickelter, energiesparender drahtloser Technologien in zunehmendem Umfang batteriebetriebene Sensoren, beispielsweise zur Überwachung von Füllstand-, Grenzstand- oder Druckwerten, an Bedeutung gewinnen. Besondere Vorteile ergeben sich für Anwendungen im Bereich der Prozessautomatisierung im industriellen Umfeld wie z. B. der Logistik.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemeint ist mit den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen im vorigen Beispiel der Logistikautomation vergleichbar.

Gemäß einer weiteren Ausführungsform weist der Messsensor einen Ruhemodus auf.

Der Messsensor kann dazu eingerichtet sein, in dem Ruhemodus stromlos zu sein oder mit der zweiten Versorgungseinheit versorgt zu werden. Die Steuereinrichtung der Energie-Management-Anordnung kann dazu eingerichtet sein, den Messsensor in den Ruhemodus stromlos zu versetzen oder den Messsensor durch die zweite Versorgungseinheit in dem Ruhemodus Strom zu versorgen.

In anderen Worten kann der Ruhemodus neben dem Betriebsmodus in dem Messsensor vorgesehen sein. Der Messsensor kann in dem Ruhemodus oder Ruhebetrieb komplett stromlos sein oder bei wenig oder keiner Energie aus Licht von einer Batterie- oder Akkueinheit versorgt werden. Es kann vorgesehen sein, dass der Messsensor erst bei der Erkennung oder Bestimmung der Lichtenergie und bei dem entsprechendem Energiegewinn durch die Energie-Harvesting-Anordnung aktiviert werden. Ferner kann die Steuereinrichtung dazu eingerichtet sein, ereignisorientiert die Energieversorgung für den Messsensor durch die Solar-Harvesting-Anordnung als die erste Versorgungseinheit in dem Betriebsmodus oder durch die zweite Versorgungseinheit in dem Ruhemodus zu aktivieren oder alternieren.

Ein weiterer Aspekt betrifft eine Energie-Management-Anordnung für ein Messsystem, welches einen Messsensor aufweist, zum Messen eines Füllstands, eines Grenzstands und/oder eines Drucks. Die Energie-Management-Anordnung weist eine Steuereinrichtung auf, die zum Aktivieren eines Betriebsmodus des Messsensors und/oder zum Ansteuern der Stromversorgung für den Messsensor eingerichtet sein.

Darüber hinaus ist die Steuereinrichtung dazu eingerichtet, mit dem Messsensor zu koppeln und ereignisorientiert den Betriebsmodus des Messsensors zu aktivieren.

Ein weiterer Aspekt betrifft die Verwendung einer Energie-Management-Anordnung für ein Messsystem zum Energiesparen bei der Anwendung des Messsystems in einer Prozessanlage.

Ein weiterer Aspekt betrifft die Verwendung eines Messsystems für eine Füllstand-, Grenzstand- und/oder Druckmessung in einem Behälter und/oder an einer offenen Messestelle eines Gewässers.

Ein weiterer Aspekt betrifft ein Verfahren mittels eines Messsystems, die zum Messen eines Füllstands, eines Grenzstands und/oder eines Drucks eingerichtet ist. Das Verfahren umfasst die folgenden Schritte: das Anordnen eines Messsensors mit einem Betriebsmodus innerhalb eines Behälters und/oder an einer dunklen Messstelle; das Bereitstellen einer Energie-Management-Anordnung mit einer Steuereinrichtung, um die Stromversorgung für den Messsensor anzusteuern; das Koppeln der Steuereinrichtung der Energie-Management-Anordnung mit dem Messsensor; und das ereignisorientierte Aktivieren des Betriebsmodus des Messsensors und/oder Erzeugen der elektrischen Energie zum Betreiben des Messsensors in dem Betriebsmodus und/oder Versorgen des Messsensors in dem Betriebsmodus mit der erzeugten elektrischen Energie mittels der Steuereinrichtung der Energie-Management-Anordnung.

Gemäß einer weiteren Ausführungsform weist das Verfahren weiterhin den Schritt von dem Versetzen des Messsensors stromlos in einen Ruhemodus oder von dem Versorgen des Messsensors in dem Ruhemodus mit dem Strom durch eine zweite Versorgungseinheit der Energie-Management-Anordnung mittels der Steuereinrichtung der Energie-Management-Anordnung.

Ein weiterer Aspekt betrifft ein computerlesbares Medium, auf dem ein Programmelement gespeichert ist, welches, wenn es auf einem Prozessor eines Messsystems ausgeführt wird, das Messsystem anweist, die Schritte des erfindungsgemäßen Verfahrens durchzuführen.

Im Folgenden werden mit Verweis auf die Figuren Ausführungsformen der vorliegenden Offenbarung beschrieben. Werden in der Figurenbeschreibung die gleichen Bezugszeichen verwendet, so beschreiben diese gleiche oder ähnliche Elemente. Die Darstellungen in den Figuren sind schematisch und nicht maßstäblich.

Kurze Beschreibung der Figuren
- Fig. 1: zeigt eine schematische Darstellung eines Messsystems gemäß einer Ausführungsform.
- Fig. 2: zeigt eine schematische Darstellung eines Messsystems gemäß einer Ausführungsform.
- Fig. 3: zeigt eine schematische Darstellung einer Energie-Management-Anordnung eines Messsystems gemäß einer Ausführungsform.
- Fig. 4: zeigt eine schematische Darstellung eines Messsystems gemäß einer Ausführungsform.

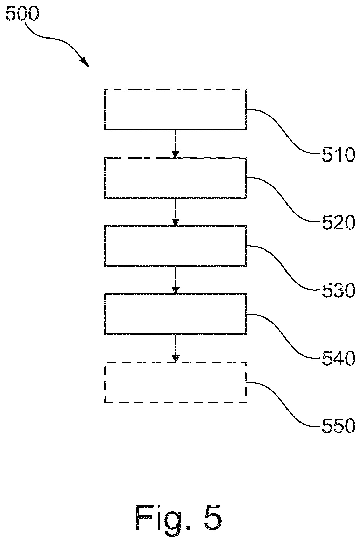

- Fig. 5: zeigt ein Flussdiagramm eines Verfahrens gemäß einer Ausführungsform.

### Detaillierte Beschreibung von Ausführungsformen

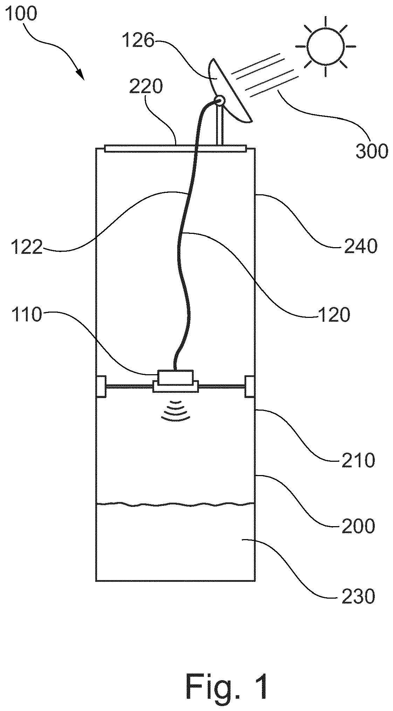

Fig. 1 zeigt schematisch ein Messsystem 100, das zum Messen eines Füllstands, eines Grenzstands und/oder eines Drucks in einem Behälter 200 mit einem Füllgut 230 eingerichtet ist. Das Messsystem 100 weist einen Messsensor 110, der einen Betriebsmodus aufweist, und eine Energie-Management-Anordnung 120 auf.

Die Energie-Management-Anordnung 120 kann eine Steuereinrichtung aufweisen und dazu eingerichtet sein, die Stromversorgung für den Messsensor 110 anzusteuern. Darüber hinaus kann die Steuereinrichtung der Energie-Management-Anordnung 120 mit dem Messsensor gekoppelt und dazu eingerichtet sein, ereignisorientiert den Betriebsmodus des Messsensors 110 zu aktivieren und/oder die elektrische Energie zum Betreiben des Messsensors 110 in dem Betriebsmodus zu erzeugen und/oder den Messsensor 110 in dem Betriebsmodus mit der erzeugten elektrischen Energie zu versorgen.

Die Energie-Management-Anordnung 120 kann eine Solar-Harvesting-Anordnung als eine erste Versorgungseinheit, wie in Fig. 1, Fig. 2 und Fig.3 gezeigt, aufweisen. Die Solar-Harvesting-Anordnung kann dazu eingerichtet sein, den Messsensor 110 in dem Betriebsmodus mit der elektrischen Energie zu versorgen.

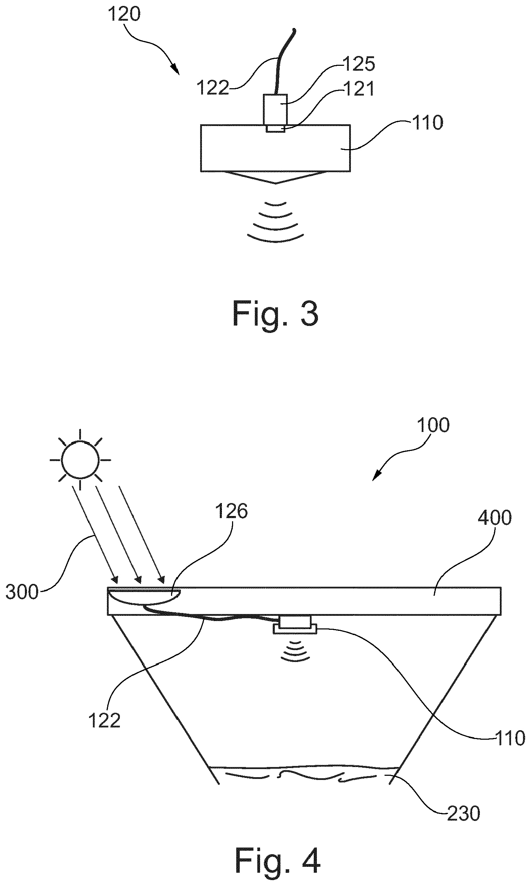

Die Solar-Harvesting-Anordnung der Energie- Management-Anordnung 120 kann eine Lichtsammeleinheit 126 aufweisen, die zum Sammeln und/oder Konzentrieren der Lichtenergie eingerichtet sein kann. Insbesondere zeigt Fig. 3 einen Aufbau der Energie-Management-Anordnung 120 mit der Solar-Harvesting-Anordnung, die weiterhin einen Lichtwellenleiter 122 und eine Solarzelle 121 aufweisen kann. Darüber hinaus kann die Solar-Harvesting-Anordnung der Energie- Management-Anordnung 120 weiterhin einen Anschluss 125 aufweisen, der zum nachrüstbaren Montieren des Lichtwellenleiters 122 und/oder der Lichtsammeleinheit 126 an dem Messsensor 120 eingerichtet sein kann. Der Anschluss 125 kann beispielsweise direkt an der Solarzelle 121 bzw. zwischen der Solarzelle 121 und des Lichtwellenleiters 122 angeordnet sein.

Die Solarzelle 121 kann zum Erzeugen oder Umwandeln der elektrischen Energie aus der Lichtenergie, die durch die Lichtsammeleinheit 126 gesammelt bzw. konzentriert werden kann, eingerichtet sein. Die Solarzelle 121 kann beispielsweise an dem Messsensor 110 angeordnet oder in dem Messsensor 110 integriert sein.

Wie in Fig. 1, Fig. 2 und Fig. 4 gezeigt, kann der Lichtwellenleiter 122 zwischen der Lichtsammeleinheit 126 und der Solarzelle 121 angeordnet sein, um die Lichtenergie von der Lichtsammeleinheit 126 an die Solarzelle 121 führen zu können.

Die Lichtsammeleinheit 126 kann eine Linse oder eine Linsenanordnung zum Lichtkonzentrieren von Lichtstrahlen, wie z.B. der Sonne, aufweisen. Mittels des Lichtwellenleiter 122 kann die Lichtsammeleinheit 126 beabstandet oder abgesetzt von der Solarzelle 121 angeordnet sein. Der Abstand zwischen der Lichtsammeleinheit 126 und der Solarzelle 121 kann je nach Anwendung vorgesehen sein. Der Lichtwellenleiter 122 kann daher flexible und/oder länglich ausgebildet sein. Alternativ kann der Lichtwellenleiter 122 starr ausgebildet sein. Beispielsweise kann der Lichtwellenleiter 122 aus einem Glasfaserkabel bestehen.

Fig. 1 zeigt, dass der Messsensor 110 innerhalb des Behälters 200 bzw. innerhalb des Gehäuses 210 des Behälters über das Füllgut 230 angeordnet sein kann, während die Linse der Lichtsammeleinheit 126 außerhalb des Behälters an dem Behälterdeckel 220 angeordnet sein kann, unabhängig davon, ob der Behälterdeckel 220 transparent oder nicht transparent ausgebildet ist. Der Lichtwellenleiter 122 kann durch den Behälterdeckel 220 oder das Gehäuse 210 hindurch vorgesehen sein, um die gesammelte bzw. konzentrierte Lichtenergie von der Lichtsammeleinheit 126 im Außenbereich des Behälters an den Messsensor 110 innerhalb des Behälters 200 zu führen. Der Messsensor 110 kann daher ohne räumliche Begrenzung ohne Berücksichtigung des Lichtstrahls zum Messen des Füllstands, des Grenzstands und/oder des Drucks angeordnet sein.

Des Weiteren kann die Lichtsammeleinheit 126 bewegbar ausgebildet sein, sodass die Lichtsammeleinheit flexibel ausgerichtet sein kann. Die Lichtsammeleinheit 126 kann bewegbar ausgebildet sein, um automatisch der Sonne nachführbar zu sein. Somit kann die Lichtenergie durch die Bewegung der Lichtsammeleinheit 126 derart ausgerichtet sein, damit die maximale Lichtenergie von der Lichtquelle bzw. der Sonne effizient gesammelt und konzentriert werden kann. Die Lichtsammeleinheit 126 kann komplett ohne Spannungsversorgung oder mit einer Batterie oder einen Akkumulator betrieben werden.

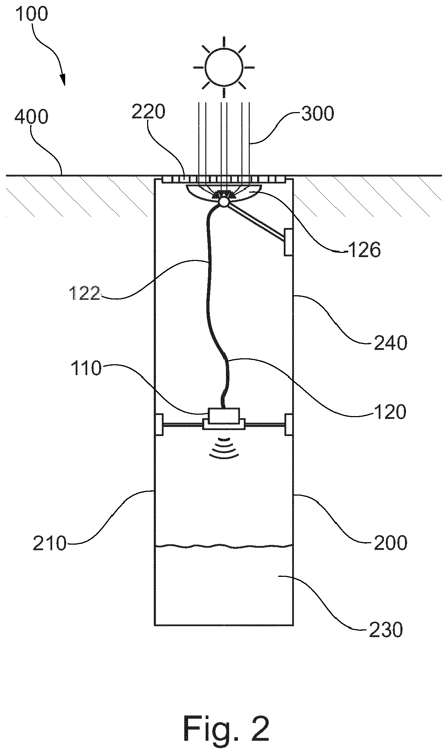

Alternativ kann die Lichtsammeleinheit 126 in Fig. 2, im Vergleich zu Fig. 1, innerhalb des Gehäuses 210 des Behälters 200 oder des Gitterschachts angeordnet sein, wenn beispielsweise der Behälterdeckel 220 transparent oder zumindest teilweise transparent ausgebildet sein kann. Beispielsweise kann der Behälterdeckel 220 ein Gitter-Schachtdeckel sein, der an einer offene Stelle 400, wie z.B. einer Straße, angeordnet oder sogar in einer Straße eingebaut sein kann. Die Lichtsammeleinheit 126 kann unterhalb des Behälterdeckels 220 an der offenen Stelle 400 der Straße derart vorgesehen sein, dass die Lichtenergie des Lichtstrahls 300 aus der Sonne als Lichtquelle durch den Behälterdeckel 220 hindurch von der Lichtsammeleinheit 126 gesammelt werden kann. Der Messsensor 110 kann dagegen an einer dunklen Messstelle innerhalb des Behältergehäuses 210 vorgesehen sein.

Beispielsweise kann die Linse der Lichtsammeleinheit 126 das Licht auch bei schrägem Lichteinfall bündeln, so dass dadurch deutliche Vorteile gegenüber einem Solarpanel ohne Linse bestehen können. Auch mögliche Verschmutzungen oder teilweise Abschattungen kann sich kaum negative auf die Stromgewinnung auswirken.

Fig. 4 zeigt ferner, dass das Messsystem 300 alternativ bei einer offenen Stelle 400, wie zum Beispiel an einer Brücke, zum Messen des Füllstands und/oder des Grenzstands eines Gewässers eingesetzt werden kann. Die Lichtsammeleinheit 126 kann beispielsweise auf der oberen Seite der Brücke angeordnet oder integriert ausgebildet sein, um die Lichtenergie des Lichtstrahls 300 zu empfangen, sammeln und/oder konzentrieren. Der Messsensor 110 kann dagegen an einer dunklen Stelle unterhalb der Brücke 400 über das Gewässer 230 angeordnet sein. Über den Lichtwellenleiter 122 kann die Lichtsammeleinheit 126 und der Messsensor 110, die entfernt oder abgesetzt voneinander angeordnet sein können, verbunden sein.

Ferner kann die Energie-Management-Anordnung 120 mittels der Steuereinrichtung, die mit dem Messsensor 110 des Messsystems 100 gekoppelt sein kann, dazu eingerichtet sein, ereignisorientiert den Betriebsmodus des Messsensors 110 zu aktivieren, die elektrische Energie zum Betreiben des Messsensors 110 in dem Betriebsmodus zu erzeugen und/oder den Messsensor 110 in dem Betriebsmodus mit der erzeugten elektrischen Energie zu versorgen. Ereignisorientiert kann das Ansteuern mittels der Steuereinrichtung der Energie-Management-Anordnung 120 anhand des Vorhandenseins oder Erkennens des Lichtstrahls 300, beispielsweise bei dem Sonnenaufgang, einer vorbestimmten Lichtintensität des Lichtstrahls und/oder eines vorbestimmten Einfallswinkels des Lichtstrahls erfolgen.

Es kann auch vorgesehen sein, dass die Steuereinrichtung der Energie-Management-Anordnung 120 dazu eingerichtet sein kann, mit einem vordefinierten Zeitintervall den Betriebsmodus des Messsensors 110 zu aktivieren. Beispielsweise kann die Energie-Management-Anordnung 120 weiterhin eine zweite Versorgungseinheit aufweisen, die dazu eingerichtet sein kann, den Messsensor 110 mit dem Strom zu versorgen. Die zweite Versorgungseinheit kann eine Batterie oder ein Akkumulator sein.

Der Messsensor 110 kann weiterhin neben dem Betriebsmodus einen Ruhemodus aufweisen. Der Messsensor 110 kann dazu eingerichtet sein, in dem Ruhemodus stromlos zu sein oder mit der zweiten Versorgungseinheit versorgt zu werden.

Dementsprechend kann die Steuereinrichtung der Energie-Management-Anordnung 120 dazu eingerichtet sein, den Messsensor 110 in den Ruhemodus stromlos zu versetzen oder den Messsensor 110 durch die zweite Versorgungseinheit in dem Ruhemodus Strom zu versorgen. Dadurch kann die Steuereinrichtung dazu eingerichtet sein, ereignisorientiert die Energieversorgung für den Messsensor 110 durch die Solar-Harvesting-Anordnung als die erste Versorgungseinheit in dem Betriebsmodus oder durch die zweite Versorgungseinheit in dem Ruhemodus zu aktivieren oder alternieren.

Fig. 3 zeigt ein Flussdiagramm eines Verfahrens 500 mittels eines Messsystems 100, das zum Messen eines Füllstands, eines Grenzstands und/oder eines Drucks eingerichtet sein kann. Im Schritt 510 wird ein Messsensor 110, der einen Betriebsmodus und/oder einen Ruhemodus aufweisen kann, innerhalb eines Behälters und/oder an einer dunklen Messstelle angeordnet.

Im Schritt 520 wird eine Energie-Management-Anordnung 120 mit einer Steuereinrichtung für das Messsystem 100 bereitgestellt, um die Stromversorgung für den Messsensor 110 anzusteuern.

Im Schritt 530 ist die Steuereinrichtung der Energie-Management-Anordnung 120 mit dem Messsensor 110 gekoppelt.

Im Schritt 540 wird das Betriebsmodus des Messsensors 110 ereignisorientiert aktiviert, die elektrischen Energie zum Betreiben des Messsensors 110 in dem Betriebsmodus erzeugt und/oder der Messsensor 110 in dem Betriebsmodus mit der erzeugten elektrischen Energie mittels der Steuereinrichtung der Energie-Management-Anordnung 120 versorgt.

Es kann ein weiter Schritt 550 vorgesehen sein, in welchem der Messsensor 110 stromlos in den Ruhemodus versetzt oder der Messsensor 110 in dem Ruhemodus mit dem Strom durch eine zweite Versorgungseinheit der Energie-Management-Anordnung 120 mittels der Steuereinrichtung versorgt werden kann.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messsystem (100), eingerichtet zum Messen eines Füllstands, eines Grenzstands und/oder eines Drucks, aufweisend:
einen Messsensor (110) aufweisend einen Betriebsmodus; und
eine Energie-Management-Anordnung (120), die eine Steuereinrichtung aufweist und dazu eingerichtet ist, die Stromversorgung für den Messsensor (110) anzusteuern;
wobei die Steuereinrichtung der Energie-Management-Anordnung (120) mit dem Messsensor gekoppelt ist und dazu eingerichtet ist, ereignisorientiert den Betriebsmodus des Messsensors (110) zu aktivieren und/oder die elektrische Energie zum Betreiben des Messsensors (110) in dem Betriebsmodus zu erzeugen und/oder den Messsensor (110) in dem Betriebsmodus mit der erzeugten elektrischen Energie zu versorgen.

2. Messsystem (100) nach Anspruch 1,
wobei die Energie-Management-Anordnung (120) eine Solar-Harvesting-Anordnung als eine erste Versorgungseinheit aufweist;
wobei die Solar-Harvesting-Anordnung dazu eingerichtet ist, den Messsensor (110) in dem Betriebsmodus mit der elektrischen Energie zu versorgen.

3. Messsystem (100) nach Anspruch 1 oder 2,
wobei die Solar-Harvesting-Anordnung der Energie-Management-Anordnung (120) eine Lichtsammeleinheit (126), eingerichtet zum Sammeln und/oder Konzentrieren der Lichtenergie, einen Lichtwellenleiter (122) und eine Solarzelle (121), eingerichtet zum Erzeugen der elektrischen Energie aus der Lichtenergie, aufweist;
wobei der Lichtwellenleiter (122) zwischen der Lichtsammeleinheit (126) und der Solarzelle (121) angeordnet ist und zum Führen der Lichtenergie von der Lichtsammeleinheit (126) an die Solarzelle (121) eingerichtet ist.

4. Messsystem (100) nach Anspruch 3,
wobei die Lichtsammeleinheit (126) beabstandet von der Solarzelle (121) angeordnet ist.

5. Messsystem (100) nach Anspruch 3 oder 4,
wobei die Lichtsammeleinheit (126) eine Linse aufweist.

6. Messsystem (100) nach einem der Ansprüche 3 bis 5,
wobei die Lichtsammeleinheit (126) bewegbar ausgebildet ist, sodass die Lichtsammeleinheit flexibel ausgerichtet werden kann.

7. Messsystem (100) nach einem der Ansprüche 3 bis 6,
wobei die Solar-Harvesting-Anordnung der Energie-Management-Anordnung (120) weiterhin einen Anschluss (125) aufweist, der zum nachrüstbaren Montieren des Lichtwellenleiters (122) und/oder der Lichtsammeleinheit (126) an dem Messsensor (120) eingerichtet ist.

8. Messsystem (100) nach einem der Ansprüche 3 bis 7,
wobei die Solarzelle (121) an dem Messsensor (110) angeordnet ist; oder wobei die Solarzelle (121) in dem Messsensor (110) integriert ist.

9. Messsystem (100) nach einem der Ansprüche 3 bis 8,
wobei der Lichtwellenleiter (122) flexibel und/oder länglich ausgebildet ist.

10. Messsystem (100) nach einem der vorhergehenden Ansprüche,
wobei der Messsensor (110) innerhalb eines Behälters (200) und/oder an einer dunklen Messstelle angeordnet ist.

11. Messsystem (100) nach einem der vorhergehenden Ansprüche,
wobei die Steuereinrichtung der Energie-Management-Anordnung (120) dazu eingerichtet ist, mit einem vordefinierten Zeitintervall den Betriebsmodus des Messsensors (110) zu aktivieren.

12. Messsystem (100) nach einem der vorhergehenden Ansprüche,
wobei die Energie-Management-Anordnung (120) weiterhin eine zweite Versorgungseinheit aufweist, die dazu eingerichtet ist, den Messsensor (110) mit dem Strom zu versorgen.

13. Messsystem (100) nach Anspruch 12,
wobei die zweite Versorgungseinheit eine Batterie oder ein Akkumulator ist.

14. Messsystem (100) nach Anspruch 12 oder 13,
wobei der Messsensor (110) weiterhin einen Ruhemodus aufweist;
wobei der Messsensor (110) dazu eingerichtet ist, in dem Ruhemodus stromlos zu sein oder mit der zweiten Versorgungseinheit versorgt zu werden;
wobei die Steuereinrichtung der Energie-Management-Anordnung (120) dazu eingerichtet ist, den Messsensor (110) in den Ruhemodus stromlos zu versetzen oder den Messsensor (110) durch die zweite Versorgungseinheit in dem Ruhemodus Strom zu versorgen.

15. Energie-Management-Anordnung (120) für ein Messsystem (100), welches einen Messsensor aufweist, zum Messen eines Füllstands, eines Grenzstands und/oder eines Drucks nach einem der Ansprüche 1 bis 14, aufweisend:
eine Steuereinrichtung, eingerichtet zum Aktivieren eines Betriebsmodus des Messsensors (110) und/oder zum Ansteuern der Stromversorgung für den Messsensor (110);
wobei die Steuereinrichtung dazu eingerichtet ist, mit dem Messsensor (110) zu koppeln und ereignisorientiert den Betriebsmodus des Messsensors (110) zu aktivieren.

16. Verwendung einer Energie-Management-Anordnung (120) nach Anspruch 16 für ein Messsystem (100) nach einem der Ansprüche 1 bis 14 zum Energiesparen bei der Anwendung des Messsystems in einer Prozessanlage.

17. Verwendung eines Messsystems (100) nach einem der Ansprüche 1 bis 14 für eine Füllstand-, Grenzstand- und/oder Druckmessung in einem Behälter (200) und/oder an einer offenen Messestelle eines Gewässers.

18. Verfahren (500) mittels eines Messsystems (100), eingerichtet zum Messen eines Füllstands, eines Grenzstands und/oder eines Drucks, aufweisend die Schritte:
Anordnen (510) eines Messsensors (110) mit einem Betriebsmodus innerhalb eines Behälters (200) und/oder an einer dunklen Messstelle;
Bereitstellen (520) einer Energie-Management-Anordnung (120) mit einer Steuereinrichtung, um die Stromversorgung für den Messsensor (110) anzusteuern;
Koppeln (530) der Steuereinrichtung der Energie-Management-Anordnung (120) mit dem Messsensor; und
Ereignisorientiertes Aktivieren (540) des Betriebsmodus des Messsensors (110) und/oder Erzeugen der elektrischen Energie zum Betreiben des Messsensors (110) in dem Betriebsmodus und/oder Versorgen des Messsensors (110) in dem Betriebsmodus mit der erzeugten elektrischen Energie mittels der Steuereinrichtung der Energie-Management-Anordnung (120).

19. Verfahren (500) nach Anspruch 18, weiterhin aufweisend den Schritt:
Versetzen (550) des Messsensors (110) stromlos in einen Ruhemodus oder Versorgen des Messsensors (110) in dem Ruhemodus mit dem Strom durch eine zweite Versorgungseinheit der Energie-Management-Anordnung (120) mittels der Steuereinrichtung der Energie-Management-Anordnung (120).

20. Computerlesbares Medium, auf dem ein Programmelement gespeichert ist, welches, wenn es auf einem Prozessor eines Messsystems (100) ausgeführt wird, das Messsystem (100) anweist, die Schritte des Verfahrens nach Anspruch 19 durchzuführen.
